# FASCICULE DE BREVET EUROPEEN

(11) **EP 0 959 343 B1**
(45) Date de publication et mention de la délivrance du brevet: **26.04.2006**
(21) Numéro de dépôt: 99401227.6
(22) Date de dépôt: 21.05.1999
(51) Int. Cl.: G01N 21/77

(54) **Capteur optique utilisant une réaction immunologique et un marqueur fluorescent**
Immunologische Reaktion und Fluoreszenzmarker verwendender optischer Filter
Optical sensor utilizing an immunological reaction and a fluorescence marker

(30) Priorité: 22.05.1998 FR 9806451
(43) Date de publication de la demande: 24.11.1999
(73) Titulaire: CSEM Centre Suisse d'Electronique et de Microtechnique SA -Recherche et Développement, 2007 Neuchâtel (CH)
(72) Inventeur: Voirin, Guy, 2024 Saint-Aubin (CH); Kunz, Rino, 8162 Steinmaur (CH)
(74) Mandataire: Colas, Jean-Pierre

(56) Documents cités:
- WO-A-95/33198
- WO-A-96/35940
- US-A- 5 631 170

## Description

La présente invention est relative à système de mesure optique présentant le concept générique défini dans le préambule de la revendication 1.

La réaction immunologique mise en oeuvre dans un biocapteur d'un tel système de mesure peut se dérouler essentiellement de deux façons différentes.

Selon une première méthode, des anticorps spécifiques pour un antigène à détecter, sont fixés sur la surface du guide d'onde.. L'échantillon à analyser dont on veut connaître la teneur en antigènes, est mélangé à des antigènes identiques à ceux que l'on veut détecter, mais chimiquement liés à un agent fluorescent (appelé aussi "marqueur" ou "label").

Cet échantillon mixte est ensuite soumis à une incubation et la fluorescence excitée par l'onde évanescente est mesurée. Si dans ces conditions, l'échantillon contient une grande quantité d'antigènes (il est dit "positif"), peu d'antigènes liés à l'agent fluorescent se couplent aux anticorps immobilisés à la surface du guide d'onde de sorte que l'on mesure une faible fluorescence. Par contre, si l'échantillon contenait au départ peu d'antigènes ou pas d'antigènes du tout (il est dit "négatif"), ceux que l'on a ajoutés avec l'agent fluorescent vont se lier aux anticorps immobilisés et on mesurera une fluorescence importante.

Selon une deuxième méthode de mise en oeuvre, on procède en quelque sorte de façon inverse. Dans ce cas, des antigènes du type de ceux que l'on veut détecter sont préalablement liés à une protéine et immobilisés à la surface du guide d'onde. L'échantillon est mélangé à des anticorps spécifiques pour cet antigène, mais liés à un agent fluorescent. Cet échantillon est mis en contact avec les antigènes préalablement immobilisés à la surface du guide d'onde, on laisse incuber, puis la fluorescence est mesurée.

Si alors, l'échantillon est positif, les anticorps munis de l'agent fluorescent se lient aux antigènes de l'échantillon au lieu de se lier aux antigènes immobilisés à la surface du guide d'onde. Les complexes antigène-anticorps-agent fluorescent restent alors loin de la surface du guide d'onde et peu de fluorescence est mesurée.

Par contre, si l'échantillon est négatif, les anticorps munis de l'agent fluorescent vont se fixer sur les antigènes immobilisés sur la surface du guide d'onde. L'agent fluorescent peut ainsi être excité par l'onde évanescente et on mesurera beaucoup de fluorescence.

La mesure peut être qualitative, mais également quantitative, si l'on mesure l'intensité de la fluorescence observée.

De façon connue, le guide d'onde peut être formé par une substance massive conduisant la lumière et sur la surface de laquelle peuvent être prévus des réseaux de diffraction permettant d'y coupler un faisceau d'excitation provenant d'une source de lumière et d'en extraire le rayonnement de sortie dû à la fluorescence et le rayonnement d'origine, non transformé par la fluorescence. Le rayonnement dû à la fluorescence ayant une longueur d'onde différente de celle du rayonnement incident, les deux rayonnements sont séparés angulairement par le réseau et un photocapteur peut être placé dans le faisceau du rayonnement de fluorescence, le signal de sortie de ce photocapteur étant alors représentatif de la quantité d'antigènes présente dans l'échantillon.

La mesure avec un tel système est influencée par des effets parasites qui sont inhérents à sa structure ou à des conditions d'environnement, comme par exemple la qualité du couplage/découplage des faisceaux de lumière, les pertes d'énergie lumineuse dans le guide d'onde et les effets de température.

Ainsi, pour faire une mesure absolue, on doit prévoir sur le guide d'onde des zones de référence dont la fluorescence est connue et qui sont prévues dans le capteur de la même manière que les zones de mesure, comme cela est décrit par exemple dans le brevet US 5 631 170. Un autre facteur nécessitant la présence d'une zone de référence est que le biocapteur est de préférence un objet jetable, de sorte que les conditions de la mesure peuvent différer d'un biocapteur à l'autre en raison des tolérances inévitables de fabrication, notamment sur les dimensions et l'état de surface du guide d'onde du biocapteur.

Cependant, la présence de ces zones de référence crée plusieurs inconvénients. Tout d'abord, elles prennent de la place sur la surface du guide d'onde diminuant d'autant la place disponible pour les zones de mesure.

Par ailleurs, les zones de référence sont forcément prévues à des endroits différents de ceux où sont localisées les zones de mesure de sorte que les conditions de mesure n'y sont pas identiques (différents états de surface, différentes épaisseurs du guide d'onde etc.). Il en résulte une imprécision inhérente du biocapteur, en dépit de la présence des zones de référence et de la mesure auxiliaire qu'elles impliquent.

Les documents WO 96/35 940 et WO 95/33198 décrivent des systèmes de mesure du type générique défini énoncé ci-dessus. Ces systèmes de mesure utilisent des biocapteurs dont le guide d'onde est fabriqué en un matériau tel que le TiO2. De ce fait, ces guides d'ondes présentent par inhérence la propriété que leur fluorescence spontanée pourrait être excitée par un faisceau de lumière d'excitation. Cependant, dans aucun des deux documents cette propriété d'excitation de la fluorescence spontanée n'est exploitée pour améliorer les résultats de la mesure.

Certes, dans le document W0 95/33198, on évoque la possibilité de capter, en dehors du rayonnement +k'ₒᵤₜ dû à la fluorescence de l'objet à mesurer, un rayonnement kₒᵤₜ mais ce dernier rayonnement n'est autre que celui dû au résidu du rayonnement de la source d'irradiation non absorbé par le guide d'onde.

L'invention a pour but de fournir un système de mesure optique utilisant des biocapteurs à réaction immunologique dans lequel le rayonnement dû à la fluorescence spontanée du matériau du guide d'onde du biocapteur est exploité pour améliorer le résultat de la mesure. Plus précisément, l'invention vise à obtenir une référence de mesure de façon simple et fiable sans diminuer la surface disponible pour la mesure proprement dite, celle-ci étant de plus indépendante de l'imprécision dimensionnelle affectant un biocapteur fabriqué en grande quantité.

L'invention a donc pour objet un système de mesure optique tel que défini dans la partie caractérisante de la revendication 1.

Grâce à ces caractéristiques, il est possible d'obtenir de façon simple et fiable une mesure de référence basée sur la fluorescence spontanée ayant lieu dans le biocapteur lui-même pour laquelle la fluorescence est excitée par le même faisceau d'excitation, la mesure de référence se faisant sur le rayonnement spontané du matériau du biocapteur de sorte qu'il subit les mêmes effets parasites que le rayonnement qui procure les données de mesure de la réaction immunologique.

D'autres caractéristiques avantageuses de l'invention ressortent des sous-revendications.

Il est à noter que dans le présent contexte, le terme "guide d'onde" doit s'entendre comme désignant soit un guide d'onde fait de façon intrinsèque du matériau présentant la fluorescence spontanée lorsqu'il est excité, soit un guide d'onde revêtu d'un tel matériau auquel cas celui-ci fait partie de ce guide d'onde.

D'autres caractéristiques et avantages de l'invention apparaîtront au cours de la description qui va suivre, donnée uniquement à titre d'exemple et faite en se référant aux dessins annexés sur lesquels:
- la figure 1 est un diagramme illustrant le concept qui est à la base de la présente invention;
- la figure 2 montre, par une vue en perspective très schématique un système de mesure et un biocapteur conçus selon l'invention;
- les figures 3 et 4 montrent par des vues analogues deux variantes d'un biocapteur utilisé dans le système de mesure selon l'invention;
- la figure 5 est également une vue schématique d'un biocapteur utilisé dans le système de mesure selon l'invention, ce biocapteur étant muni d'un canal capillaire pour le guidage d'un échantillon à analyser;
- les figures 6 à 9 illustrent d'autres variantes du biocapteur;
- la figure 10 montre une vue schématique en coupe d'un mode de réalisation préféré d'un biocapteur utilisable dans le système de mesure selon l'invention;
- la figure 11 est un schéma simplifié d'un système de mesure complet selon l'invention, dans lequel est incorporé un biocapteur.

L'invention est basée sur l'observation que si on utilise certains matériaux pour réaliser le guide d'onde dans lequel est engendrée l'onde évanescente, il est possible d'exciter une fluorescence spontanée, à condition que la densité d'énergie lumineuse couplée dans le guide d'onde soit suffisante.

Si, selon l'invention, le matériau du guide d'onde est choisi de telle manière que sa fluorescence propre ait une courbe d'intensité en fonction de la longueur d'onde, décalée par rapport à la courbe d'intensité de l'agent fluorescent utilisé pendant la réaction immunologique, il devient possible de créer une mesure de référence localisée dans le guide d'onde, c'est à dire là où ont lieu la ou les réaction(s) immunologique(s) proprement dite(s). Dans ces conditions, un rayonnement couplé dans le guide d'onde avec une longueur d'onde prédéterminée sera transformé pour une partie en rayonnement fluorescent dû à la réaction immunologique et pour une autre partie en rayonnement dû à la fluorescence spontanée du matériau du guide d'onde. Comme ces deux rayonnements ont des longueurs d'onde différentes, ils peuvent être découplés du guide d'onde sous différents angles de sorte qu'ils deviennent facilement détectables individuellement par des photocapteurs distincts.

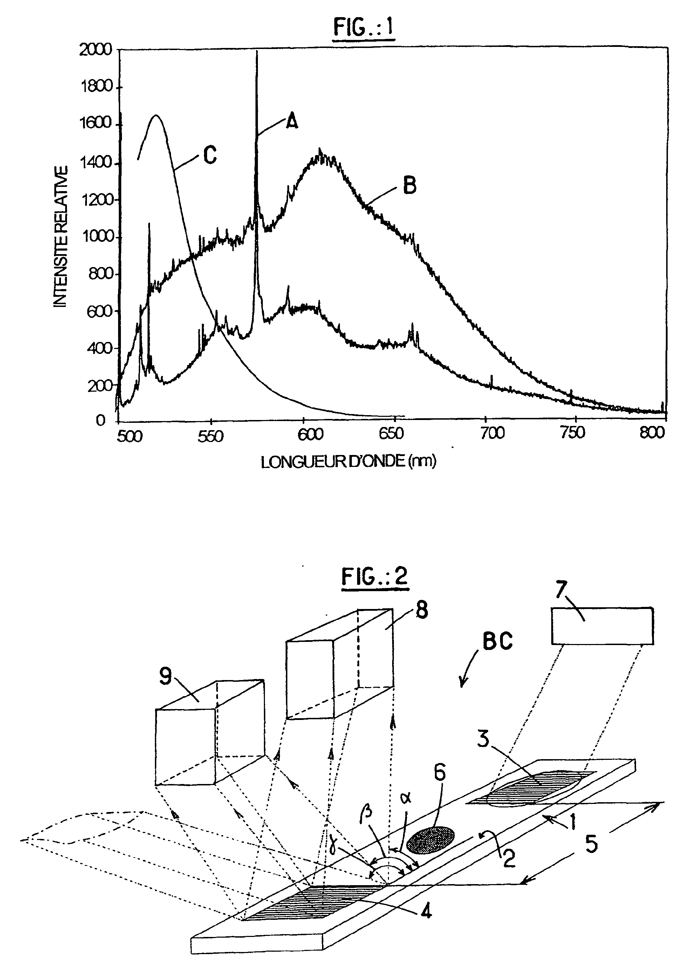

Le diagramme de la figure 1 illustre le concept de l'invention. Il représente trois graphes A, B et C de l'intensité relative de la fluorescence en fonction de la longueur d'onde en nm.

Les courbes A et B sont représentatives de deux exemples de matériaux spécifiques pouvant être utilisés dans le cadre de l'invention pour le guide d'onde à savoir le nitrure de silicium Si₃N₄, d'une part et l'oxyde de titane TiO₂, d'autre part. Ces matériaux ont respectivement des pics d'intensité de fluorescence à 575 nm et 610 nm, environ. La courbe C est représentative de la fluorescence d'un agent ou marqueur pouvant être utilisé dans la réaction immunologique. Il s'agit ici de la fluorescéine dont le pic de fluorescence se situe à 520 nm, environ. On voit d'après ce graphe que les pics des courbes de fluorescence sont décalés suffisamment pour obtenir des longueurs d'onde bien distinctes l'une de l'autre, du marqueur d'une part et du matériau du guide d'onde d'autre part.

La figure 2 est une représentation schématique d'un exemple de biocapteur à réaction immunologique utilisable dans le système de mesure selon l'invention, indiqué par la référence générale BC. Il comporte un guide d'onde 1 formé d'une lamelle, ou d'une couche, d'un matériau transparent à la lumière et de haut indice de réfraction. On verra par la suite qu'avantageusement, la couche de haut indice de réfraction peut être une couche de matériau déposée sur un substrat par des techniques de fabrication bien connues dans le domaine des semi-conducteurs.

A titre d'exemple et selon l'invention, la couche 1 est réalisée au moins partiellement en un matériau dans lequel une fluorescence peut être excitée spontanément. Des exemples de matériaux convenant particulièrement bien à cet effet sont le nitrure de silicium, l'oxyde de titane et l'oxyde de tantale. Le guide d'onde peut être constitué par l'ensemble de la couche ou il peut être délimité dans celle-ci par photo-usinage de façon à se limiter à une partie seulement de celle-ci. Ceci vaut d'ailleurs pour tous les modes de réalisation et variantes décrits par la suite.

Pour assurer l'excitation de la fluorescence spontanée du guide d'onde du biocapteur, on peut utiliser pour celui-ci un matériau qui présente intrinsèquement cette propriété. Toutefois, il est également possible d'obtenir la fluorescence spontanée par dopage avec une substance de dopage appropriée du guide d'onde ou encore grâce à une couche déposée sous ou sur le guide d'onde en un matériau intrinsèque ou dopé.

A la surface 2 de la couche 1 de haut indice sont ménagés des réseaux de diffraction 3 et 4 formés par des microstries et constituant respectivement un réseau d'entrée et un réseau de sortie. On notera que dans ce premier mode de réalisation de l'invention, les microstries sont orientées transversalement par rapport à la grande dimension (longueur) du guide d'onde.

Il convient de noter, également, que les réseaux de diffraction peuvent être réalisés à la surface inférieure ou à la surface supérieure de la couche 1 ou, même, sur les deux surfaces inférieure et supérieure.

Entre les réseaux de diffraction 3 et 4 se situe une zone de mesure 5 dans laquelle peuvent être localisées des régions de réaction formées chacune par un dépôt d'un composant de la réaction immunologique ou élément d'analyse comme des anticorps ou des antigènes tels que décrits ci-dessus. Sur la figure 2, une seule région de réaction a été indiquée par le cercle 6.

Le biocapteur BC est intégré dans un système de mesure selon l'invention qui comprend une source lumineuse 7, telle qu'un laser par exemple, capable de coupler dans le guide d'onde de l'énergie lumineuse par l'intermédiaire du réseau de diffraction d'entrée, cette énergie étant capable d'y exciter de la fluorescence spontanée. La longueur d'onde de la source 7 est de préférence choisie à la longueur d'onde correspondant au maximum d'absorption du marqueur fluorescent (492 mm pour la fluorescéine). L'énergie de fluorescence ainsi engendrée quitte le guide d'onde 1 sous un angle α déterminé, fonction de la longueur d'onde de fluorescence spontanée du matériau dont est fait le guide d'onde. Un photocapteur 8 est placé sur le trajet de ce rayonnement de fluorescence pour qu'il puisse être détecté en tant que référence de mesure.

La région de réaction 6 ayant été mise en contact (par exemple par pipetage) avec une substance à examiner, le rayonnement d'excitation provenant de la source 7 excite également, le cas échéant, de la fluorescence à une longueur d'onde spécifique du marqueur utilisé. A titre d'exemple d'une substance pouvant être examinée à l'aide d'un système de mesure selon l'invention, on peut citer le lait dont on veut connaître la teneur en antibiotiques résiduels. La longueur d'onde du marqueur étant choisie différente de celle de la fluorescence spontanée, le rayonnement dû à la fluorescence de la réaction immunologique quitte le guide d'onde 1 par l'intermédiaire du réseau de diffraction de sortie 4, mais sous un angle β différent de l'angle α précité. Un deuxième photocapteur 9 est placé sur le trajet de ce rayonnement de mesure pour en assurer la détection.

Enfin, l'énergie lumineuse restante, non découplée sous les angles α et β, sort du guide d'onde sous son propre angle de sortie y. Dans le cas où le support du guide d'onde est transparent, les faisceaux lumineux peuvent entrer et sortir du côté du support par l'intermédiaire de réseaux de diffraction réalisés à l'interface entre le guide d'onde et le support transparent.

On constate que, dans le système de mesure selon l'invention, la mesure de référence est faite dans des conditions exactement identiques à celles de la mesure par la réaction immunologique de sorte que tous les effets parasites peuvent être pris en compte sans difficultés.

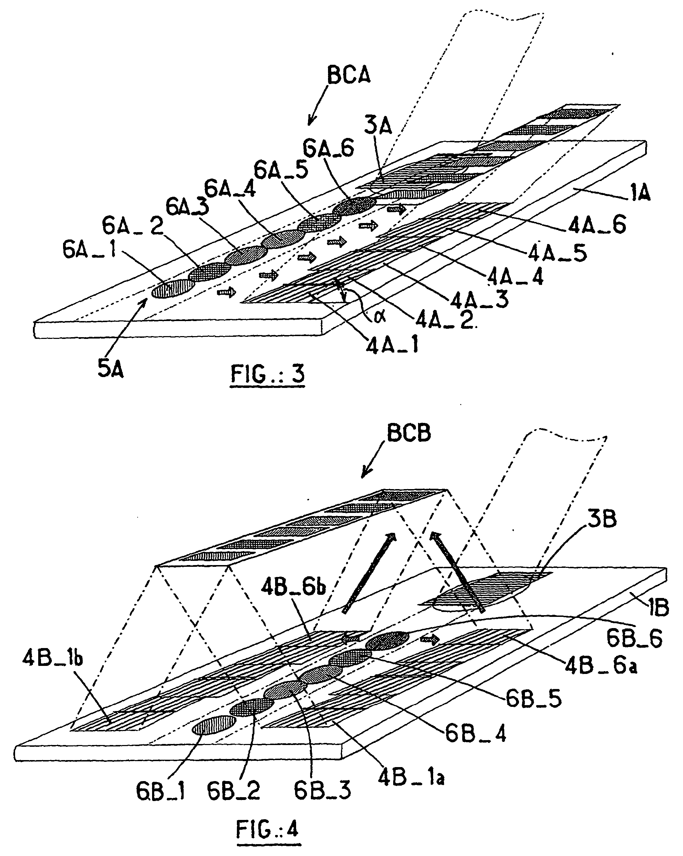

La figure 3 représente un second mode de réalisation de l'invention dans lequel un biocapteur BCA comporte un guide d'onde 1A dans laquelle est prévu un réseau de diffraction d'entrée 3A pour le faisceau d'excitation ainsi qu'une pluralité de réseaux de diffraction de sortie 4A-1 à 4A-6 pouvant découpler du rayonnement dû à la fluorescence d'autant de réactions immunologiques ayant lieu dans des régions de mesure 6A-1 à 6A-6, placées dans une zone de mesure 5A. La fluorescence due aux réactions immunologiques dans ces régions est supposée être excitée ici par un même marqueur de fluorescence de sorte que le rayonnement de mesure est découplé de la lamelle 1A sous un angle α identique pour toutes les régions de mesure 6A-1 à 6A-6. Bien que cela ne soit pas représenté sur la figure 3, dans ce cas, le biocapteur BCA est intégré dans un système de mesure équipé de photocapteurs analogues aux photocapteurs 8 et 9 de la figure 2. Le rayonnement de mesure provenant des différents réseaux de diffraction de découplage 4A-1 à 4A-6 est avantageusement mesuré par une rangée de photocapteurs comportant autant de pixels qu'il y a de régions. Un réseau de cellules CCD peut convenir à cet effet. Bien entendu, il convient également de prévoir un ou plusieurs photocapteurs analogues au photocapteur 8 de la figure 2 afin de détecter à partir d'au moins un réseau de diffraction de sortie le rayonnement découplé dû à la fluorescence spontanée excitée dans le matériau du guide d'onde 1A. On peut ici prévoir un seul photocapteur ne détectant ce rayonnement qu'à partir d'un seul réseau de sortie, mais également autant de photocapteurs qu'il y a de réseaux de sortie afin de disposer d'une mesure de référence pour toutes les régions de réaction 6A-1 à 6A-6.

On notera que dans ce mode de réalisation du biocapteur selon l'invention, les stries des réseaux de diffraction de découplage sont orientées parallèlement à la dimension longitudinale de la lamelle 1A.

La figure 4 représente un autre mode de réalisation de l'invention dans lequel un guide d'onde 1B du biocapteur BCB comporte des régions de réaction 6B-1 à 6B-6 placées entre deux rangées de réseaux de diffraction de sortie 4B-1a à 4B-6a, d'une part et 4B-1b et 4B-6b d'autre part, ces rangées étant alignées longitudinalement le long de la zone de mesure 5B. Celle-ci est irradiée par ailleurs par l'intermédiaire d'un réseau de diffraction d'entrée 3B. Les réseaux de diffraction de sortie sont orientes de manière que leurs stries soient parallèles à la direction longitudinale de la lamelle 1B. Par ailleurs, les rangées 4B-1a à 4B-6a, respectivement 4B-1b à 4B-6b sont orientées en opposition de manière que les faisceaux découplés puissent se renforcer dans les photocapteurs 9 (ici également non représentés pour plus de clarté, comme d'ailleurs le ou les photocapteurs 8). Les photocapteurs peuvent être prévus de la même façon que déjà décrite à propos de la figure 3.

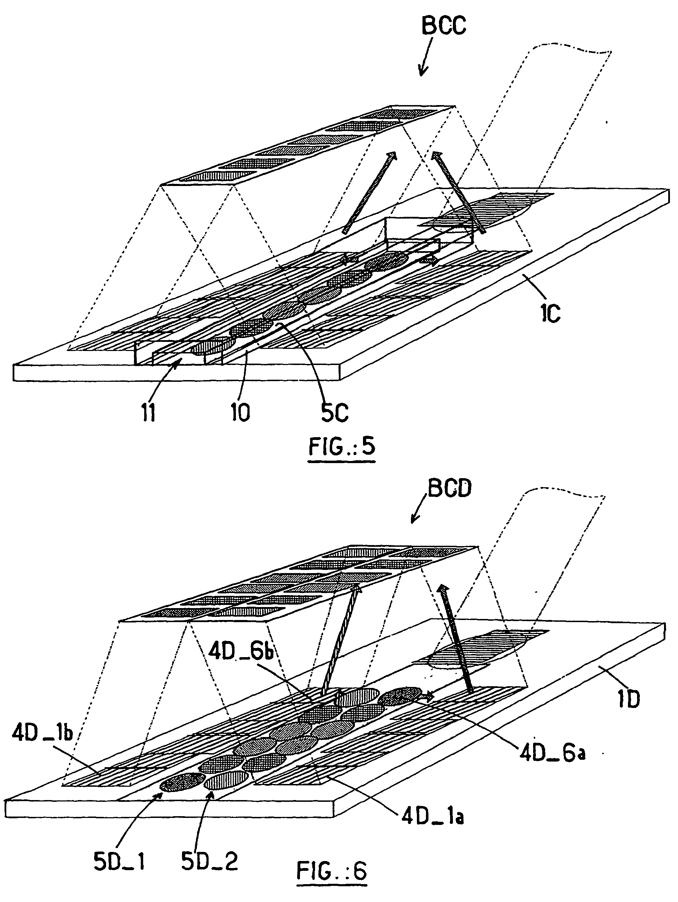

La figure 5 représente une variante de biocapteur BCC semblable à celui de la figure 4, cependant qu'ici, la zone de mesure 5C est recouverte d'une pièce de recouvrement 10 à section en forme de "U" inversé. Cette pièce de recouvrement peut constituer avec la surface supérieure du guide d'onde 1C de ce biocapteur un capillaire 11 d'aspiration des substances à mesurer.

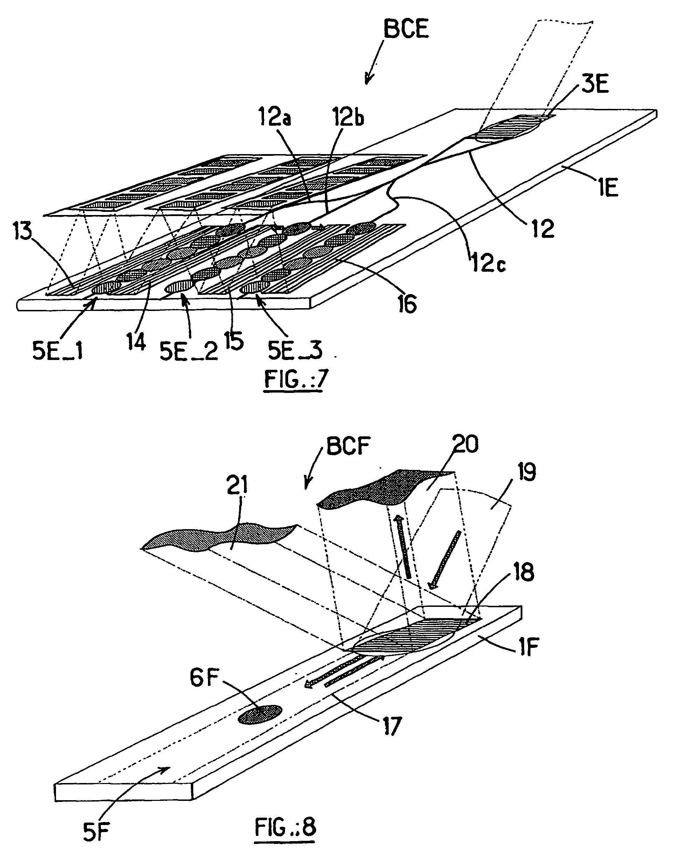

La figure 6 représente une autre variante de biocapteur BCD semblable à celui de la figure 4. Dans ce cas, la lamelle 1D présente parallèlement à sa dimension longitudinale deux zones de mesure, respectivement 5D-1 et 5D-2 comportant chacune son propre jeu de régions de réaction. Les réseaux de diffraction de sortie 4D-1a à 4D-6a, respectivement 4D-1b à 4D-6b sont placés de la même façon que les réseaux de la variante de la figure 4, cependant qu'ils agissent par rangée sur deux jeux de photocapteurs 9 (non représentés) placés côte à côte au-dessus de la lamelle 1D.

La figure 7 montre un autre mode de réalisation du biocapteur BCE utilisable dans le système de mesure selon l'invention. Dans ce cas, une lamelle 1E comprend un réseau de diffraction d'entrée 3E dont les stries sont orientées transversalement par rapport à la dimension longitudinale de la lamelle 1E. Dans la lamelle 1E est obtenu par micro-usinage un guide d'onde 12 qui se ramifie en trois voies 12a, 12b, 12c desservant chacune une zone de mesure, respectivement 5E-1, 5E-2 et 5E-3. Ces zones de mesure sont prévues entre des réseaux de diffraction 13 à 16 recueillant les rayonnements fluorescents de mesure et de référence respectivement de la zone 5E-1 pour ce qui concerne les réseaux 13 et 14, de la zone 5E-2 pour ce qui concerne les réseaux 14 et 15 et de la zone 5E-3 pour ce qui concerne les réseaux 15 et 16. Dans ce cas, des photocapteurs sont utilisés en trois rangées pour la mesure, des photocapteurs pour la mesure de la référence pouvant être prévus pour chacune des zones de mesure, par exemple.

Dans le cas de la figure 8, on a représenté un autre mode de réalisation d'un biocapteur BCF pour un système de mesure selon l'invention, comportant un support 1F sur lequel est délimité un guide d'onde 17 et qui ne comporte qu'un seul réseau de diffraction 18 servant à la fois à coupler l'énergie lumineuse (faisceau 19) dans le guide d'onde 17 et à découpler l'énergie lumineuse qui y est excitée par fluorescence. Le guide d'onde 17 ne comporte ici, à titre d'exemple, qu'une seule zone de mesure 5F pourvue d'une seule région de réaction 6F. Lors de l'analyse d'un échantillon, un faisceau de mesure 20 et un faisceau de référence 21 sont ainsi découplés du guide d'onde à partir du réseau de diffraction 18. De nouveau, des photocapteurs permettent de détecter les faisceaux de mesure et de référence 20 et 21 (ils ne sont pas représentés).

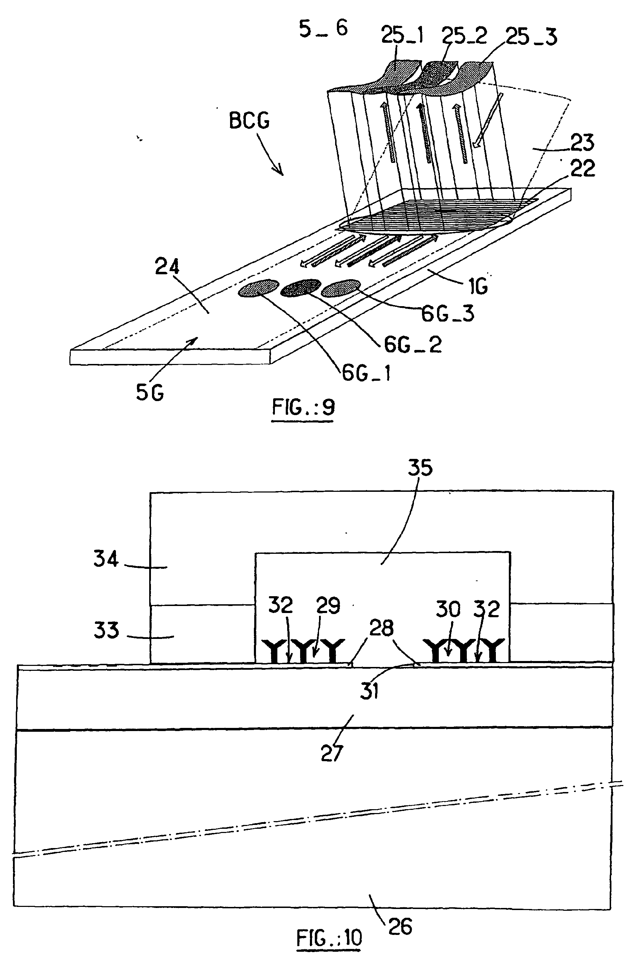

Le biocapteur BCG de la figure 9 est une variante de celui représenté sur la figure précédente. Ici, un support 1G n'est également pourvu que d'un seul réseau de diffraction 22 irradié par un faisceau d'entrée 23. Ce réseau coopère avec un guide d'onde 24 dont la largeur est choisie de manière que la zone de mesure 5G soit d'une largeur permettant de prévoir plusieurs régions de réaction 6G1, 6G2 et 6G3 placées côte à côte, cette largeur étant également celle du réseau de diffraction. Lors de l'analyse, ce biocapteur BCG produit, outre le faisceau de référence (non représenté ici) trois faisceaux contigus 25-1, 25-2 et 25-3 dus à la fluorescence excitée dans les échantillons.

La figure 10 montre une vue en coupe transversale d'un biocapteur pour un système de mesure selon l'invention, réalisé à titre d'exemple par micro-usinage à l'aide de méthodes de photolithographie classiques.

Un substrat en silicium 26 est recouvert d'une couche d'oxyde de silicium thermique 27. Sur cette couche 27 est déposée sélectivement une couche 28 d'un matériau susceptible de produire un rayonnement dû à la fluorescence spontanée. Cette couche constitue le guide d'onde au sens de la présente invention. Dans le cas représenté, la couche est en nitrure de silicium obtenu par dépôt chimique en phase vapeur à basse pression. Sur la figure 10, on voit que dans cette couche 28 sont délimitées des zones de mesure 29 et 30 séparées par un intervalle 31. Des réseaux de diffraction d'entrée et de sortie ou d'entrée/sortie combinés (non représentés sur la figure 10) sont usinés dans la couche 28 par transfert lithographique et gravure à l'acide fluorhydrique tamponnée ou avec un plasma réactif. Le matériau utilisé pour le support du guide d'onde peut également être une matière plastique, les réseaux peuvent alors également y être ménagés par matriçage à l'aide d'une empreinte ou par moulage par injection. Dans ce cas, la couche formant guide d'onde est déposée, par exemple, en phase vapeur à basse température sur un support du biocapteur.

Les régions de réaction 32 sont recouvertes d'une substance de réaction ou élément d'analyse comprenant dans cet exemple des anticorps.

Un circuit microfluidique est disposé au-dessus de la couche formant le guide d'onde. Il s'agit d'une couche sélective 33 d'oxyde de silicium déposée à basse température par-dessus laquelle est disposé un organe de recouvrement 34 qui avec cette couche sélective 33 délimite un canal capillaire 35 à travers lequel l'échantillon peut être aspiré vers les régions de réaction 31 et 32.

Dans tous les modes de réalisation et dans toutes les variantes qui viennent d'être décrits, il est possible, selon d'autres caractéristiques avantageuses de l'invention, de modifier le comportement de la couche de matériau formant le guide d'onde de telle manière qu'elle présente des propriétés de fluorescence spécifique générée lors de l'excitation par le mode du guide d'onde. Par exemple, il est possible de doper cette couche de matériau sur une profondeur plus ou moins grande permettant de déterminer cette fluorescence spécifique. Ainsi, selon l'invention, on peut doper la couche avec des terres rares telles que l'erbium et l'europium qui ont la propriété de donner naissance à des rayonnements de fluorescence de longueurs d'onde distinctes et voisines différentes des longueurs d'onde spécifiques des réactions immunologiques et du matériau utilisé pour le guide d'onde. Le rapport des intensités des rayonnements de fluorescence dus à ces dopants est une indication de la température du biocapteur. Ces rayonnements découplés du guide d'onde par l'intermédiaire d'un réseau de diffraction, peuvent alors être mesurés par des photocapteurs associés aux photocapteurs de mesure et de référence 8 et 9 de la figure 2. Ceci permet, par l'exploitation des signaux fournis par ces photocapteurs supplémentaires, de déterminer indirectement non seulement la puissance se propageant dans le guide d'onde, mais également la température du biocapteur.

Le signal de température pourra également être exploité pour réguler la température du biocapteur en lui imposant une ambiance thermique prédéterminée favorable aux réactions immunologiques qui s'y déroulent.

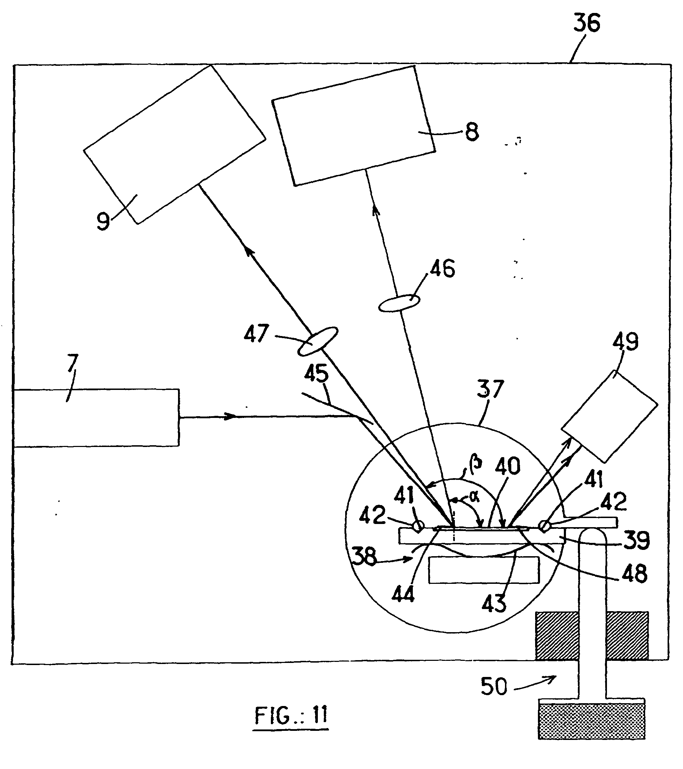

La figure 11 montre très schématiquement une vue en élévation d'un système de mesure dans lequel un biocapteur selon l'invention peut être utilisé.

Un tel système comprend un bâti (simplement ébauché sur la figure 11 par le carré 36) sur lequel est montée une table 37 pivotant autour d'un axe horizontal. Cette table porte une monture 38 dans laquelle peuvent être insérés des supports jetables 39. Chaque support comporte un biocapteur 40 également jetable. En position de mesure, le support 39 muni de rainures en V de positionnement 41, est appuyé contre des goupilles 42 solidaires du bâti 36, par un ressort 43 prenant appui sur la monture 38.

La source de lumière 7 est un laser qui irradie un endroit au niveau de la monture 38 où se situe à chaque fois un réseau de couplage 44 (figure 11) du biocapteur 40, par l'intermédiaire d'un miroir de renvoi 45. Le photocapteur 8 reçoit le rayonnement dû à la fluorescence spontanée (angle α) par l'intermédiaire d'une lentille de focalisation 46.

Le rayonnement de mesure est découplé du guide d'onde du biocapteur 40 sous un angle β pour être détecté par le photocapteur 9 à travers une lentille de focalisation 47.

On voit donc que le biocapteur 40 utilisé dans ce système de mesure est du type décrit précédemment à propos du mode de réalisation de la figure 8. On observera cependant que le biocapteur 40 diffère de ce mode de réalisation spécifique par la présence d'un deuxième réseau de couplage 48 par lequel on peut découpler du guide d'onde du biocapteur 40, des rayonnements de fluorescence dus à un dopage spécifique par exemple par l'erbium et l'europium, comme décrit précédemment. Ces rayonnements sont envoyés sur un détecteur 49 dont le signal de sortie peut être employé pour contrôler, et éventuellement commander par l'intermédiaire d'une boucle de réglage (non représentée), l'énergie envoyée dans le biocapteur 40 par la source 7, ou encore la température de celui-ci.

On notera enfin que la position de la table pivotante 37 peut être ajustée finement grâce à un dispositif à vis micrométrique 50 permettant d'ajuster avec précision les trajets des rayons lumineux.

## Revendications

1. Système de mesure utilisant des biocapteurs optiques (BC à BCG) utilisant une réaction immunologique et un marqueur fluorescent susceptible d'être excité par une onde évanescente, chaque biocapteur comprenant
- un support (26),
- un guide d'onde de lumière (1) ménagé sur ce support,
- au moins un réseau de diffraction (3, 4; 18) ménagé dans au moins l'une des surfaces (2) du guide d'onde pour respectivement coupler un faisceau d'excitation dans le guide d'onde et découpler un faisceau de mesure dû à la fluorescence hors dudit guide d'onde,
- au moins un élément d'analyse étant fixé dans au moins une région de réaction (6) délimitée sur ladite surface de manière à pouvoir contribuer à exciter la fluorescence dudit marqueur en coopération avec un échantillon à analyser, ledit marqueur ayant une courbe de fluorescence présentant un pic d'énergie à une première longueur d'onde de fluorescence prédéterminée,
- ledit guide d'onde (1) étant fait en un matériau dont la fluorescence peut être excitée spontanément en présence d'un faisceau d'excitation,
- ledit système comprenant également une source de lumière (7) pour irradier ledit au moins un réseau de diffraction (3, 4), un premier photocapteur (9) pour détecter le rayonnement de fluorescence découplé dudit guide d'onde grâce audit au moins un réseau de diffraction (3, 4), cette fluorescence étant due audit marqueur,
- ce système étant **caractérisé en ce que** ladite source de lumière présente une longueur d'onde permettant d'exciter la fluorescence du matériau dudit guide d'onde, cette fluorescence étant située à une seconde longueur d'onde différente de la première longueur d'onde et **en ce que** ce système comprend également un second photocapteur (8) pour détecter le rayonnement de fluorescence découplé dudit guide d'onde (1) grâce audit au moins un réseau de diffraction (3, 4) et excité spontanément dans ledit guide d'onde (1) par le rayonnement provenant de ladite source (7), ledit second photocapteur fournissant une référence de mesure.

2. Système de mesure suivant la revendication 1, **caractérisé en ce que** ledit guide d'onde (1) est dopé avec au moins une substance de dopage susceptible de déterminer la longueur d'onde de la fluorescence spontanée, et **en ce que** ledit système comporte également au moins un détecteur supplémentaire (49) pour détecter le rayonnement fluorescent excité à la longueur d'onde de cette fluorescence spontanée.

3. Système de mesure suivant la revendication 2, **caractérisé en ce que** ladite substance de dopage est choisie parmi les terres rares telles que l'erbium et l'europium.

4. Système de mesure suivant l'une quelconque des revendications 2 et 3, **caractérisé en ce que** ledit détecteur supplémentaire (49) est connecté à une boucle de réglage connecté pour, à l'aide du signal fourni par ce détecteur, régler l'énergie envoyée dans ledit biocapteur (40) ou la température de ce biocapteur.

5. Système de mesure suivant l'une quelconque des revendications précédentes, **caractérisé en ce que** le matériau dont est fait ledit guide d'onde est du nitrure de silicium, de l'oxyde de titane ou de l'oxyde de tantale.

6. Système de mesure suivant l'une quelconque des revendications 1 à 5, **caractérisé en ce que** ledit guide d'onde (1) est réalisé en un matériau présentant intrinsèquement ladite fluorescence spontanée.

7. Système de mesure suivant l'une quelconque des revendications 1 à 6, **caractérisé en ce que** ledit guide d'onde (1) est dopé avec une substance provoquant, lorsqu'elle est excitée ladite fluorescence spontanée.

8. Système de mesure suivant l'une quelconque des revendications 1 à 7, **caractérisé en ce que** ledit guide d'onde (1) est revêtu d'une couche d'un matériau présentant ladite fluorescence spontanée lorsqu'il est excité, ou d'une couche dopée d'un tel matériau.

9. Système de mesure suivant l'une quelconque des revendications 1 à 8, **caractérisé en ce que** ledit biocapteur comprend un réseau de diffraction (18) communiquant avec ledit guide d'onde (1F), à la fois pour le couplage et le découplage desdits faisceaux de lumière.

10. Système de mesure suivant l'une quelconque des revendications 1 à 9, **caractérisé en ce que** ledit biocapteur comporte au moins un réseau de diffraction d'entrée (3) et au moins un réseau de diffraction de sortie (4) communiquant avec le ou les guide(s) d'onde (1).

11. Système de mesure suivant l'une quelconque des revendications 9 et 10, **caractérisé en ce que** ledit au moins un réseau de diffraction (3, 4; 18) est formé de stries ménagées dans ladite surface (2) par micro-usinage, par empreinte ou par moulage par injection.

12. Système de mesure suivant la revendication 11, **caractérisé en ce que** la surface (2) dudit guide d'onde dans lequel est ménagé ledit au moins un réseau de diffraction présente une forme générale rectangulaire et **en ce que** les stries du réseau de diffraction (3, 4; 18) sont orientées parallèlement ou perpendiculairement par rapport à la grande dimension de ladite surface.

13. Système de mesure suivant les revendications 11 et 12 lorsqu'elles dépendent de la revendication 10, **caractérisé en ce que** ledit biocapteur comprend au moins un réseau de diffraction de couplage (3A) dont les stries sont perpendiculaires à ladite grande dimension et au moins un réseau de diffraction de découplage (4A-1 à 4A-6) dont les stries sont parallèles à cette dimension.

14. Système de mesure suivant la revendication 13, **caractérisé en ce que** ledit biocapteur comprend au moins une rangée de réseaux de diffraction de découplage (4A-1 à 4A-6) contiguë à au moins une rangée de régions de réaction (6A-1 à 6A-6), et **en ce que** la rangée de régions comporte autant de régions qu'il y à de réseaux dans la rangée de réseaux.

15. Système de mesure suivant la revendication 14, **caractérisé en ce que** deux rangées de réseaux de diffraction de sortie (4A-1a à 4A-6a; 4A-1b à 4A-6b) sont disposées de part et d'autre d'une rangée de régions de réaction (6A-1 à 6A-6).

16. Système de mesure suivant la revendication 15, **caractérisé en ce que** les réseaux de diffraction de sortie (4A-1a à 4A-6a; 4A-1b à 4A-6b) des deux rangées sont orientées de telle manière que les rayonnements qu'ils découplent dudit guide d'onde (1 B) se renforcent.

17. Système de mesure suivant l'une quelconque des revendications 1 à 16, **caractérisé en ce que** lesdites régions de réaction sont disposées dans un canal capillaire (10, 11) pour l'aspiration dudit échantillon.

18. Système de mesure suivant l'une quelconque des revendications 1 à 17, **caractérisé en ce que** ledit biocapteur y est monté de façon amovible.

## Patentansprüche

1. Messsystem, das optische Biosensoren (BC bis BCG) verwendet, die eine immunologische Reaktion und einen Fluoreszenzmarker verwenden, das dafür geeignet ist, durch eine evaneszente Welle angeregt zu werden, wobei jeder Biosensor umfasst:
- einen Träger (26),
- einen Lichtwellenleiter (1), der auf diesem Träger angeordnet ist,
- mindestens ein Beugungsgitter (3, 4; 18), das in mindestens einer der Flächen (2) des Wellenleiters angeordnet ist, um jeweils einen Anregungsstrahl in den Wellenleiter zu koppeln und einen Messstrahl, der auf Fluoreszenz zurückzuführen ist, aus dem Wellenleiter auszukoppeln,
- mindestens ein Analyseelement, das in mindestens einem Reaktionsbereich (6) befestigt ist, der auf der Fläche abgegrenzt ist, sodass es dazu beitragen kann, die Fluoreszenz des Markers in Zusammenwirkung mit einer zu analysierenden Probe anzuregen, wobei der Marker eine Fluoreszenzkurve besitzt, die einen Energiespitzenwert bei einer ersten vorgegebenen Fluoreszenzwellenlänge aufweist,
- wobei der Wellenleiter (1) aus einem Material hergestellt ist, dessen Fluoreszenz spontan bei Vorhandensein eines Anregungsstrahls angeregt werden kann,
- wobei das System auch eine Lichtquelle (7) umfasst, um das mindestens eine Beugungsgitter (3, 4) zu bestrahlen, einen ersten Photomessfühler (9), um die Fluoreszenzstrahlung zu erfassen, die aus dem Wellenleiter ausgekoppelt wird, dank dem mindestens einen Beugungsgitter (3, 4), wobei die Fluoreszenz auf den Marker zurückzuführen ist,
- wobei dieses System **dadurch gekennzeichnet ist, dass** die Lichtquelle eine Wellenlänge aufweist, die es erlaubt, die Fluoreszenz des Materials des Wellenleiters anzuregen, wobei diese Fluoreszenz bei einer zweiten Wellenlänge liegt, die sich von der ersten Wellenlänge unterscheidet, und dadurch, dass dieses System auch einen zweiten Photomessfühler (8) umfasst, um die Fluoreszenzstrahlung zu erfassen, die aus dem Wellenleiter (1) ausgekoppelt wird, dank dem mindestens einen Beugungsgitter (3, 4), und die spontan in dem Wellenleiter (1) durch die Strahlung angeregt wird, die aus der Quelle (7) stammt, wobei der zweite Photomessfühler eine Bezugsmessung liefert.

2. Messsystem nach Anspruch 1, **dadurch gekennzeichnet, dass** der Wellenleiter (1) mit mindestens einer Dotiersubstanz dotiert ist, die dazu geeignet ist, die Wellenlänge der spontanen Fluoreszenz zu bestimmen, und dadurch, dass das System auch mindestens einen zusätzlichen Sensor (49) aufweist, um die fluoreszierende Strahlung zu erfassen, die bei der Wellenlänge dieser spontanen Fluoreszenz angeregt wird.

3. Messsystem nach Anspruch 2, **dadurch gekennzeichnet, dass** die Dotiersubstanz unter den seltenen Erden wie Erbium und Europium ausgewählt ist.

4. Messsystem nach einem der Ansprüche 2 und 3, **dadurch gekennzeichnet, dass** der zusätzliche Sensor (49) mit einem Regelkreis verbunden ist, um mithilfe des Signals, das von diesem Sensor bereitgestellt wird, die Energie zu regeln, die dem Biosensor (40) zugeführt wird, oder die Temperatur des Biosensors.

5. Messsystem nach einem der vorhergehenden Ansprüche, **dadurch gekennzeichnet, dass** das Material, aus dem der Wellenleiter hergestellt ist, Siliciumnitrid, Titanoxid oder Tantaloxid ist.

6. Messsystem nach einem der Ansprüche 1 bis 5, **dadurch gekennzeichnet, dass** der Wellenleiter (1) aus einem Material hergestellt ist, das im Wesentlichen spontane Fluoreszenz aufweist.

7. Messsystem nach einem der Ansprüche 1 bis 6, **dadurch gekennzeichnet, dass** der Wellenleiter (1) mit einer Substanz dotiert ist, die spontane Fluoreszenz hervorruft, wenn sie angeregt wird.

8. Messsystem nach einem der Ansprüche 1 bis 7, **dadurch gekennzeichnet, dass** der Wellenleiter (1) mit einer Schicht eines Materials beschichtet ist, das spontane Fluoreszenz aufweist, wenn es angeregt wird, oder mit einer Schicht, die mit einem solchen Material dotiert ist.

9. Messsystem nach einem der Ansprüche 1 bis 8, **dadurch gekennzeichnet, dass** der Biosensor ein Beugungsgitter (18) umfasst, das mit dem Wellenleiter (1F) kommuniziert, sowohl für das Koppeln als auch für das Auskoppeln der Lichtstrahlen.

10. Messsystem nach einem der Ansprüche 1 bis 9, **dadurch gekennzeichnet, dass** der Biosensor mindestens ein Eingangs-Beugungsgitter (3) und mindestens ein Ausgangs-Beugungsgitter (4) aufweist, das mit dem oder den Wellenleiter(n) (1) kommuniziert.

11. Messsystem nach einem der Ansprüche 9 und 10, **dadurch gekennzeichnet, dass** das mindestens eine Beugungsgitter (3, 4; 18) aus Rillen gebildet ist, die in der Fläche (2) durch Feinstbearbeitung, durch Prägen oder Spritzgießen eingebracht sind.

12. Messsystem nach Anspruch 11, **dadurch gekennzeichnet, dass** die Fläche (2) des Wellenleiters, in dem mindestens ein Beugungsgitter angeordnet ist, eine im Allgemeinen rechteckige Form aufweist, und dadurch, dass die Rillen des Beugungsgitters (3, 4; 18) parallel oder senkrecht im Verhältnis zur großen Abmessung der Fläche ausgerichtet sind.

13. Messsystem nach Anspruch 11 und 12, wenn diese von Anspruch 10 abhängen, **dadurch gekennzeichnet, dass** der Biosensor mindestens ein Kopplungs-Beugungsgitter (3A) aufweist, dessen Rillen senkrecht zur großen Abmessung der Fläche sind, und mindestens ein Auskopplungs-Beugungsgitter (4A-1 bis 4A-6), dessen Rillen parallel zu dieser Ausdehnung sind.

14. Messsystem nach Anspruch 13, **dadurch gekennzeichnet, dass** der Biosensor mindestens eine Reihe Auskopplungs-Beugungsgitter (4A-1 bis 4A-6) umfasst, die an mindestens eine Reihe Reaktionsbereiche (6A-1 bis 6A-6) grenzt, und dadurch, dass die Reihe der Bereiche ebenso viele Bereiche umfasst wie Gitter in der Reihe Gitter vorhanden sind.

15. Messsystem nach Anspruch 14, **dadurch gekennzeichnet, dass** zwei Reihen Ausgangs-Beugungsgitter (4A-1a bis 4A-6a; 4A-1b bis 4A-6b) zu beiden Seiten einer Reihe Reaktionsbereiche (6A-1 bis 6A-6) angeordnet sind.

16. Messsystem nach Anspruch 15, **dadurch gekennzeichnet, dass** die Ausgangs-Beugungsgitter (4A-1a bis 4A-6a; 4A-1b bis 4A-6b) der zwei Reihen so ausgerichtet sind, dass die Strahlungen, die sie aus dem Wellenleiter (1B) auskoppeln, sich verstärken.

17. Messsystem nach einem der Ansprüche 1 bis 16, **dadurch gekennzeichnet, dass** die Reaktionsbereiche in einem Kapillarkanal (10, 11) für das Ansaugen der Probe angeordnet sind.

18. Messsystem nach einem der Ansprüche 1 bis 17, **dadurch gekennzeichnet, dass** der Biosensor darauf abnehmbar montiert ist.

## Claims

1. A measuring system using optical biosensors (BC to BCG) using an immunological reaction and a fluorescent marker that can be excited by an evanescent wave, each biosensor comprising :
- a support (26),
- an optical waveguide (1) formed on said support,
- at least one diffraction grating (3, 4; 18) formed in at least one surface (2) of said waveguide for respectively coupling an excitation beam into said waveguide and decoupling a measurement beam due to fluorescence out of said waveguide,
- at least one analysis element fixed in at least one reaction region (6) delimited on said surface to contribute to exciting fluorescence of said marker by interaction with a sample to be analyzed, wherein said marker has a fluorescence curve with an energy peak at a predetermined first fluorescence wavelength,
- said waveguide (1) being made of a material whose fluorescence can be excited spontaneously in the presence of an excitation beam,
- said system also comprising a light source (7) for irradiating said at least one diffraction grating (3, 4), a first photodetector (9) for detecting the fluorescence lighting decoupled from said waveguide thanks to said at least one diffraction grating (3, 4), said fluorescence being due to said marker,
- said system being **characterized in that** said light source has a wavelength which enables to excite the fluorescence of the material of said waveguide, said fluorescence being located at a second wavelength different from said first wavelength, and **in that** said system also comprises a second photodetector (8) for detecting the fluorescence lighting decoupled from said waveguide (1) thanks to said at least one diffraction grating (3, 4) and spontaneously excited in said waveguide (1) by lighting coming from said source (7), said second photodectector providing a measuring reference.

2. The measuring system according to claim 1, **characterized in that** said waveguide (1) is doped with at least one doping substance to determine the wavelength of the spontaneous fluorescence, and **in that** said system also comprises at least one additional detector (49) for detecting the fluorescence lighting excited at the wavelength of said spontaneous fluorescence.

3. The measuring system according to claim 2, **characterized in that** said doping substance is selected from rare earths such as erbium or europium.

4. The measuring system according to any claim 2 or 3, **characterized in that** said additional detector (49) is connected to an adjustment loop connected for, thanks to the signal provided by said detector, adjusting the energy sent in said biosensor (40) or the temperature of said biosensor.

5. The measuring system according to any preceding claim, **characterized in that** the material of said waveguide is silicon nitride, titanium oxide or tantalum oxide.

6. The measuring system according to any claim 1 to 5, **characterized in that** said waveguide (1) is made of a material that intrinsically exhibits said spontaneous fluorescence.

7. The measuring system according to any claim 1 to 6, **characterized in that** said waveguide (1) is doped with a substance that causes said spontaneous fluorescence when it is excited.

8. The measuring system according to any claim 1 to 7, **characterized in that** said waveguide (1) is coated with a layer of a material that exhibits said spontaneous fluorescence when it is excited, or with a layer doped with such a material.

9. The measuring system according to any claim 1 to 8, **characterized in that** said biosensor comprises a diffraction grating (18) communicating with said waveguide (1 F), for both coupling and decoupling said light beams.

10. The measuring system according to any claim 1 to 9, **characterized in that** said biosensor comprises at least one input diffraction grating (3) and at least one output diffraction grating (4) communicating with said waveguide(s) (1).

11. The measuring system according to claims 9 and 10, **characterized in that** said at least one diffraction grating (3, 4 ; 18) is formed by lines formed in said surface (2) by micromachining, embossing or injection molding.

12. The measuring system according to claim 11, **characterized in that** said surface (2) of said waveguide in which said at least one diffraction grating is formed has a rectangular overall shape and **in that** the lines of said diffraction grating (3, 4; 18) are parallel or perpendicular to the lengthwise dimension of said surface.

13. The measuring system according to claims 11 and 12 when depending on claim 10, **characterized in that** said biosensor comprises at least one coupling diffraction grating (3A) whose lines are perpendicular to said lengthwise dimension and at least one decoupling diffraction grating (4A-1 to 4A-6) whose lines are parallel to said lengthwise dimension.

14. The measuring system according to claim 13, **characterized in that** said biosensor comprises at least one row of decoupling diffraction gratings (4A-1 to 4A-6) contiguous with at least one row of reaction regions (6A-1 to 6A-6), and **in that** said row of regions comprises as many regions as there are gratings in said row of gratings.

15. The measuring system according to claim 14, **characterized in that** two rows of output diffraction gratings (4A-1 a to 4A-6a ; 4A-1 b to 4A-6b) are arranged on respective opposite sides of a row of reaction regions (6A-1 to 6A-6).

16. The measuring system according to claim 15, **characterized in that** the output diffraction gratings (4A-1 a to 4A-6a ; 4A-1b to 4A-6b) of the two rows are oriented to assure additive combination of the radiation that each decouples from said waveguide (1B).

17. The measuring system according to any claim 1 to 16, **characterized in that** said reaction regions are arranged in a capillary channel (10, 11) for aspirating said sample.

18. The measuring system according to any claim 1 to 17, **characterized in that** said biosensor is removable.
